# DEMANDE DE BREVET EUROPEEN

(11) **EP 4 372 486 A1**
(43) Date de publication de la demande: **22.05.2024**
(21) Numéro de dépôt: 22207998.0
(22) Date de dépôt: 17.11.2022
(51) Int. Cl.: G04D 1/00, B25J 15/06, B25J 15/08

(54) **DISPOSITIF PRÉHENSEUR DE MAINTIEN, CENTRAGE ET/OU SERRAGE EN PINCE D'UN COMPOSANT DE MICROMÉCANIQUE OU D'HORLOGERIE, ET PROCÉDÉ DE FIXATION ASSOCIÉ**

(71) Demandeur: ETA SA Manufacture Horlogère Suisse, 2540 Grenchen (CH)
(72) Inventeur: DONZÉ, Christophe, 2542 Pieterlen (CH); PHAM, Patric, 3427 Utzenstorf (CH)
(74) Mandataire: ICB SA

(57) **Abrégé**

Un aspect de l'invention concerne un dispositif préhenseur (100) de maintien, centrage, et/ou serrage d'un composant (200) de micromécanique ou d'horlogerie dans une chambre délimitée par une pince comportant au moins un mors mobile (2) et au moins un mors fixe (3), où une partie des mors mobiles (2) et/ou fixes (3) comporte une surface de référence (20) pour un appui frontal d'un composant (200), et ce dispositif préhenseur (100) comporte à la fois, d'une part des mors fixes (3) comportant la surface de référence (20) pour l'appui du composant (200) et des mors mobiles (2) pour le centrage et/ou le serrage du composant (200), et d'autre part un générateur de dépression (60) pour faire le vide dans la chambre de serrage. L'invention concerne encore un procédé de fixation d'un composant (200) de micromécanique ou d'horlogerie dans la chambre de serrage d'un tel dispositif préhenseur (100) selon lequel on dispose ledit composant (200) sur ladite surface de référence (20), puis on effectue un premier maintien par dépression, puis un deuxième maintien de couple supérieur à celui dudit premier maintien par pivotement des mors mobiles (2).

## Description

### Domaine technique de l'invention

L'invention concerne un dispositif préhenseur de maintien, centrage, et/ou serrage en pince d'un composant de micromécanique ou d'horlogerie dans une chambre de serrage délimitée par une pince comportant au moins un mors mobile.

L'invention concerne encore un procédé de fixation d'un tel composant de micromécanique ou d'horlogerie dans la chambre de serrage que comporte un tel dispositif préhenseur.

L'invention concerne le domaine de la micromécanique, le positionnement et le serrage des composants lors d'une étape de fabrication, ou encore le positionnement et le serrage des outils lors d'une étape de fabrication.

### Arrière-plan technologique

Le positionnement très précis de composants de micromécanique, notamment d'horlogerie, dans des outillages de fabrication, est toujours délicat. Il est nécessaire de concilier ce positionnement précis avec un serrage adéquat, sans induire de déformation inappropriée. Le problème est similaire pour le positionnement et le maintien des micro-outils utilisés dans les opérations de fabrication, et nécessite souvent un indexage angulaire parfait.

Parmi les moyens de serrage existants, on connaît de nombreuses variantes de mandrins à pinces, ces pinces étant élastiques ou articulées pour maintenir le composant. En particulier, dans les moyens de serrage conventionnel, il est très fréquent en horlogerie d'utiliser des serrages de type pince « Ottet ». Ce type de serrage permet de serrer des composants en ouvrant ou en fermant des segments de pince qui se déforment de manière élastique, en général sous l'action combinée selon une direction axiale d'un système vis-écrou, d'un moyen de rappel élastique tel qu'un ressort, d'un poussoir tel une bille ou similaire en appui sur ce moyen de rappel élastique, et d'un cône fermant ou ouvrant coopérant avec des secteurs à profil conique ou arrondi, que comportent les segments. Ces segments sont prévus pour être usinés, la plupart du temps intérieurement, afin d'épouser au mieux les contours du composant à serrer, et ils peuvent être usinés en place dans la machine pour un maximum de précision. La pince est elle-même montée sur une palette qui peut être serrée/desserrée sur un dispositif de serrage automatique équipant généralement le diviseur d'une machine d'usinage. Le principe de serrage par cône d'une telle pince est décrit dans le document EP1602426B1.

Toutefois, comme les segments doivent pivoter pour serrer le composant, il n'existe pas d'appui de référence fixe dans l'espace afin d'assurer la hauteur et la localisation des composants. En d'autres termes, si un composant est serré avec ce type de pince, il est difficile de garantir sa position, tant axiale que radiale, avec précision. Il suffit par exemple que le composant ne possède pas tout-à-fait les mêmes dimensions, ou que le frottement entre les différents segments et le cône de serrage change, pour que la position relative du composant par rapport à la pince soit légèrement modifiée. Ce problème est d'autant plus important pour un usinage de reprise qui nécessite d'usiner des opérations de manière localisée par rapport à des précédentes opérations.

Lorsqu'un appui de précision est nécessaire, il n'est généralement plus possible d'utiliser ce type de pince élastique standard, car l'espace à disposition au centre du serrage est réservé aux composants mécaniques qui transmettent les efforts de serrage/desserrage.

Par conséquent, pour ces cas de figure, des solutions plus personnalisées sont généralement requises et donc moins flexibles, plus encombrantes, et plus onéreuses.

Un autre problème est le maintien après une opération d'usinage d'un composant usiné détouré dans un composant brut, lequel seul reste maintenu dans les pinces.

On remarque, encore, qu'avec la tendance à la miniaturisation des machines d'usinage de micromécanique, il est aujourd'hui nécessaire de construire des moyens de serrage toujours plus compacts qui garantissent toutes les fonctionnalités souhaitées, la rigidité et la précision nécessaires.

### Résumé de l'invention

L'invention se propose d'améliorer le positionnement et le serrage d'un composant, ou d'un outil, de micromécanique ou d'horlogerie, dans un dispositif préhenseur, avec incorporation dans ce dernier d'un appui de référence de précision, et d'un maintien par dépression, complémentaire à un serrage mécanique classique, ou se substituant à un tel serrage. A cet effet, l'invention concerne un dispositif préhenseur de maintien, centrage, et/ou serrage d'un composant de micromécanique ou d'horlogerie selon la revendication 1.

La présente invention peut ainsi résoudre ce problème d'appui de référence fixe dans l'espace, en offrant au moins un appui fixe de référence, et en particulier par la modification d'une pince standard issue du négoce, d'un modèle reconnu et répandu, ce qui rend très économique la fabrication d'un dispositif préhenseur selon l'invention. De plus une telle modification ne modifie pas l'encombrement extérieur de la pince.

Le problème du maintien d'un composant usiné détouré dans un composant brut maintenu en pinces, peut, quant à lui, être résolu par un préhenseur comportant des moyens de maintien par dépression. Toutefois, une pince standard est dépourvue d'un tel système, alors qu'il est nécessaire, après détourage, de maintenir un tel composant usiné, d'augmenter la force de maintien de ce composant usiné, et de le maintenir en position. En effet, après détourage, la pince peut continuer à serrer la partie restante du composant brut ; le composant usiné lui-même n'est plus serré, que la pince soit serrée ou non.

La présente invention résout également ce problème et permet d'amener du vide au niveau du composant à maintenir, également sur la base d'une pince standard modifiée.

Un autre aspect de l'invention concerne un procédé de fixation d'un tel composant de micromécanique ou d'horlogerie dans la chambre de serrage que comporte un tel dispositif préhenseur.

### Brève description des figures

Les buts, avantages et caractéristiques de l'invention apparaîtront mieux à la lecture de la description détaillée qui va suivre, en référence aux dessins annexés, où :

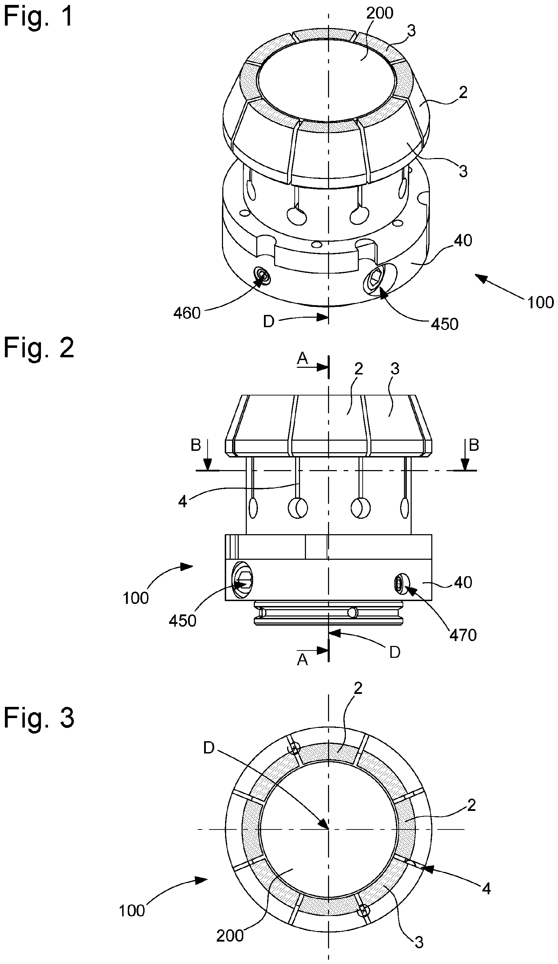

- la figure 1 représente, de façon schématisée et en perspective, un dispositif préhenseur selon l'invention, réalisé sur la base d'une pince élastique du négoce comportant une pluralité de mors séparés par des fentes ; cette pince élastique est de type à serrage sensiblement concentrique autour d'un axe de pince ; certains de ces mors sont usinés intérieurement de façon à ne plus être mobiles lors de l'activation de la pince élastique, et deviennent des mors fixes, en opposition aux mors mobiles, avec lesquels ils sont, dans cette variante non limitative, disposés en alternance ; ainsi cette pince comporte à la fois des mors fixes solidarisés au niveau d'une plaque de maintien et dépourvus de cône actionneur, et des mors mobiles comportant des cônes actionneurs ; ici, de façon non limitative, un seul mors fixe comporte un canal de dépression faisant le vide dans la chambre de serrage ;
- la figure 2 représente, de façon schématisée et en vue de côté, le dispositif préhenseur de la figure 1 ;
- la figure 3 représente, de façon schématisée et en vue de dessus, le dispositif préhenseur de la figure1 ;

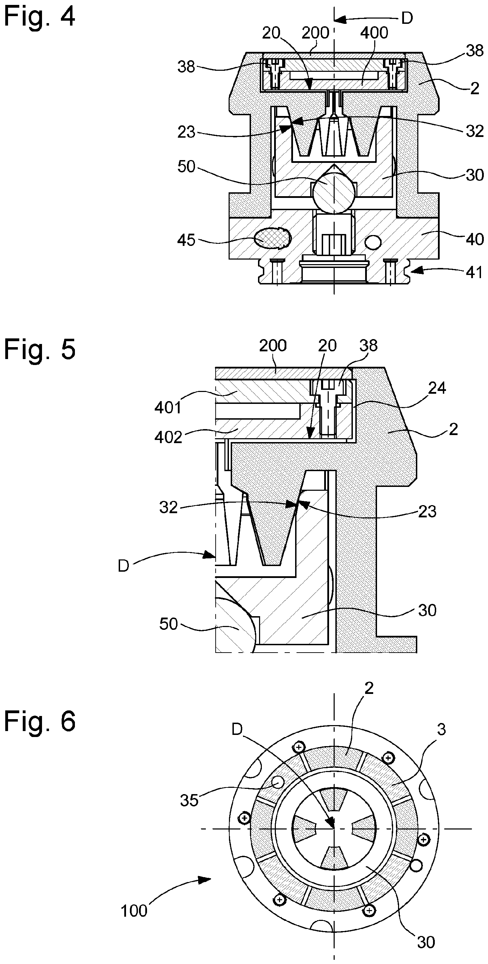

- la figure 4 représente, de façon schématisée et en vue en coupe selon la coupe A-A définie par la figure 2, le dispositif préhenseur de la figure 1 ; on voit l'étagement, selon l'axe de pince et en partant de l'extrémité inférieure du dispositif préhenseur, une palette avec une interface de manipulation standardisée, ici sous la forme d'une gorge, et qui est traversée par le logement d'un organe de manœuvre non représenté, tel que vis ou tige, de poussée ou de traction, cette palette portant un organe de poussée, ici une bille posée sur un ressort non représenté, qui est actionné par l'organe de manœuvre pour pousser un cône, qui est ici un cône fermant, lequel coopère avec des secteurs coniques que comportent les mors mobiles. Ces mors mobiles comportent un dégagement, entourant une plaque de maintien des mors fixes, non représentés dans cette coupe, qui elle-même porte le composant à positionner et à serrer, ce dégagement permettant la manœuvre des mors mobiles en pivotement pour serrer le composant ; on comprend ainsi l'actionnement des mors mobiles par leur cône d'actionnement lors d'une action sur la vis de serrage ; on voit aussi, en partie basse de la palette, une partie de la chambre du venturi ;
- la figure 5 est un détail de la figure 4 montrant ce dégagement ;
- la figure 6 représente, de façon schématisée et en vue en coupe selon la coupe B-B définie par la figure 2, le dispositif préhenseur de la figure 1 ; on voit l'alternance des mors fixes et des mors mobiles, dont les seuls secteurs coniques sont visibles en partie centrale, les mors fixes étant dépourvus de cônes d'actionnement ;

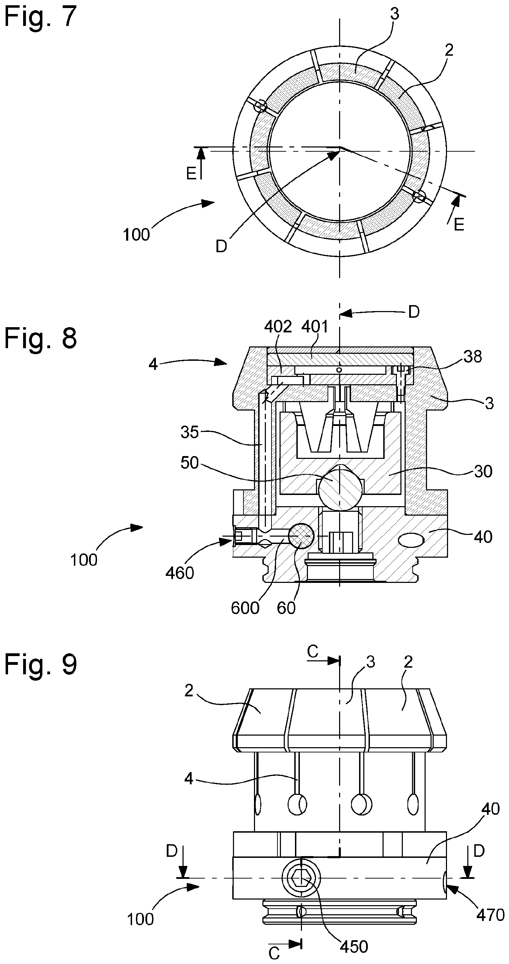

- la figure 7 représente, de façon similaire à la figure 3, le dispositif préhenseur de la figure 1 après pivotement des mors ;
- la figure 8 représente le dispositif préhenseur de la figure 1 en vue en coupe selon la coupe E-E définie par la figure 7 ; on voit, dans la palette, des canaux de passage d'air, et une portion d'une chambre de logement du venturi faisant générateur de dépression ; les extrémités supérieures des mors mobiles sont agencées pour porter et serrer le composant à positionner et à serrer ; la figure montre les mors mobiles et un canal du circuit de dépression communiquant avec la zone d'aspiration créée par le venturi visible en partie basse de la figure ;
- la figure 9 représente, de façon similaire à la figure 2, le dispositif préhenseur de la figure 1 après pivotement des mors ;

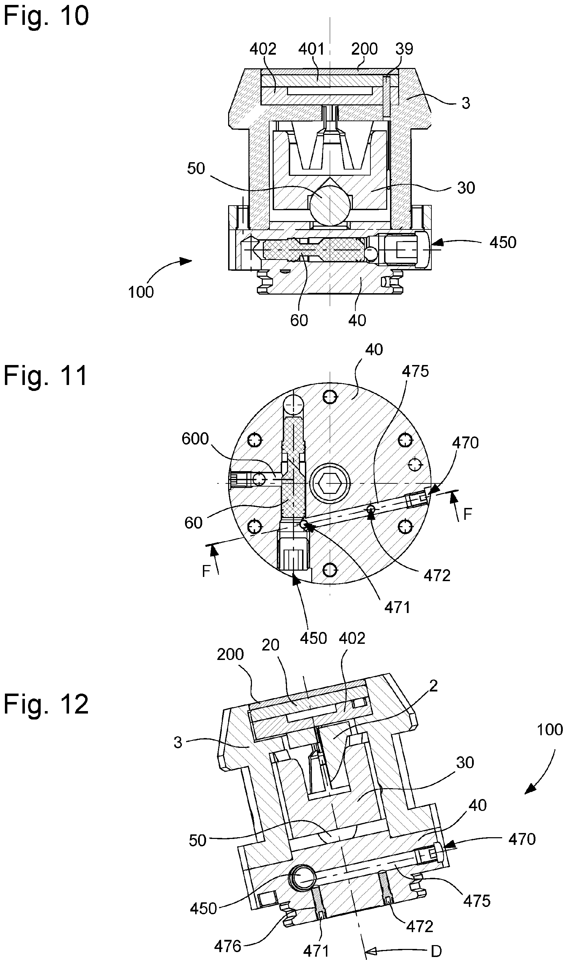

- la figure 10 représente, de façon similaire à la figure 8, le dispositif préhenseur de la figure 1 en vue en coupe selon la coupe C-C définie par la figure 9, et montre le venturi dans son canal ;
- la figure 11 représente le dispositif préhenseur de la figure 1 en vue en coupe selon le plan de coupe D-D défini par la figure 9, et montre le venturi dans son canal, ainsi que les canaux voisins de soufflage et d'évacuation ;
- la figure 12 représente le dispositif préhenseur de la figure 1 en vue en coupe selon le plan de coupe F-F défini par la figure 11, et montre le canal de soufflage avec ses deux pistes de soufflage, et une partie du conduit d'aspiration dans un des mors mobiles ;
- la figure 13 représente, de façon schématisée, éclatée et en vue de côté, les composants de base d'une pince élastique utilisable pour réaliser un dispositif préhenseur selon l'une des figures 1 à 12, avec un cône fermant ;
- la figure 14 représente, de façon schématisée, éclatée et en vue de côté, les composants de base d'une pince élastique utilisable pour réaliser un dispositif préhenseur selon une autre réalisation, avec un cône ouvrant.

### Description détaillée de l'invention

L'invention concerne un dispositif préhenseur 100 de maintien, centrage, et/ou serrage en pince d'un composant 200 de micromécanique ou d'horlogerie dans une chambre de serrage délimitée par une pince 80 comportant au moins un mors mobile 2.

Plus particulièrement, et dans la version non limitative illustrée par les figures, l'invention concerne un préhenseur avec une pince à mors sensiblement concentriques, répartis autour d'un axe de pince D ; les principes de l'invention qui vont être décrits plus loin sont toutefois applicables à d'autres outillages de fabrication, de type étau, ou outillages spéciaux à mâchoires mobiles.

Dans les variantes non limitatives illustrées par les figures, l'invention est réalisée par la modification de pinces de serrage 80 du marché (de type pince « Ottet » ou similaire) afin d'ajouter un appui de référence de précision, et/ou un maintien par dépression avec une grande compacité.

L'appui de référence permet de positionner avec précision les composants à serrer.

Le maintien par dépression permet plusieurs options, et notamment de :
- détourer un composant usiné issu d'un composant brut serré en pince, en maintenant par dépression ce composant usiné sur une empreinte de la pince, pendant que le reste du composant brut reste serré dans la pince ;
- augmenter la force de maintien du composant contre l'appui ;
- maintenir le composant en place, après le desserrage et la mise en position desserrée, en attendant par exemple qu'un opérateur ou un robot effectue une charge/décharge de composants.

L'exemple illustré concerne l'utilisation d'une pince standard comme base de serrage, avec la modification économique de pinces standards 80 de type pince « Ottet » ou similaires.

Cette pince modifiée est prévue pour être assemblée sur une palette 40 dotée d'une interface 41 standard proposée par des fournisseurs comme « Erowa », « Yerly », « TG-Colin » ou autres, afin d'être interchangeable et d'équiper tout type de machine avec ce moyen de serrage. Dans une variante de réalisation, ce dispositif peut également être directement fixé sur un nez d'arbre quelconque.

Le serrage/desserrage des composants peut être effectué soit manuellement avec une vis, en dehors de la machine, soit automatiquement, par exemple et non limitativement avec une tige de commande équipée sur la machine.

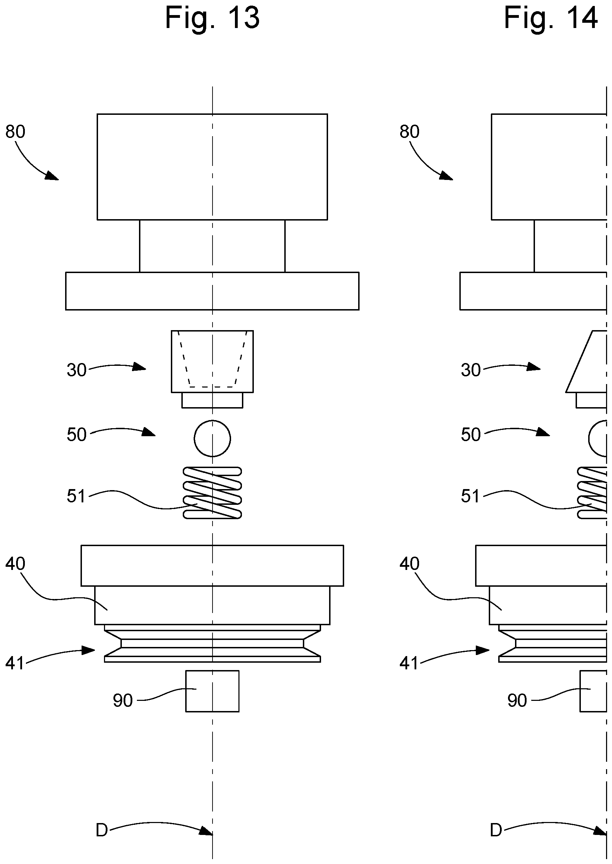

Le dispositif 100 comporte un cône 30, qui est un élément qui permet de fermer, respectivement ouvrir, la pince, en fonction de sa forme fermant/ouvrant, tel que visible sur les figures 13 (cône fermant) et 14 (cône ouvrant).

Pour procéder à la modification de la pince standard utilisée, l'invention va découpler en deux fonctions distinctes le rôle des segments de la pince, ici constitués par des mors mobiles 2 et des mors fixes 3. De façon particulière et non limitative, pour être équilibré, on propose de partager la moitié des segments pour chaque fonction ; toute autre combinaison est possible selon les contraintes propres à l'opération de fabrication à réaliser.

La première fonction reste la fonction de base d'un préhenseur, soit serrer/desserrer le composant 200, tout en assurant son centrage.

La deuxième fonction consiste à supprimer le mouvement de serrage/desserrage, et à solidariser et rigidifier les segments au travers d'une plaque commune afin d'offrir un appui de référence fixe. Pour supprimer ce mouvement sur certains segments souhaités, les cônes qui permettent d'actionner ces segments particuliers doivent préalablement être éliminés/usinés.

Les mors mobiles 2 permettent de serrer/desserrer le composant 200 (première fonction), et les mors fixes 3 solidarisés entre eux forment l'appui de référence (deuxième fonction).

L'actionnement des mors mobiles 2 est réalisé par la coopération entre d'une part le cône de commande 30 fermant ou ouvrant, mû via une vis de serrage 90 traversant la palette 40 et agencée pour pousser le moyen de poussée 50, notamment une bille ou un poussoir-navette, lequel est combiné à un moyen de rappel élastique 51 axial tel qu'un ressort, ce cône 30 comportant des surfaces coniques 32, et d'autre part des surfaces évolutives complémentaires 23, notamment des surfaces coniques que comportent les mors mobiles 2 incorporés dans la pince 80. Naturellement les surfaces coniques du cône 30 et des mors peuvent être remplacées par d'autres surfaces à profil évolutif.

Ainsi, selon l'invention, au moins un mors mobile 2 ou un mors fixe 3, ou bien quand la pince comporte une pluralité de mors au moins une partie des mors mobiles 2 et/ou des mors fixes 3 de la pince 80, comporte une surface de référence 20, qui est agencée pour un appui frontal direct d'un composant 200 et/ou pour un appui frontal direct d'une plaque de maintien intermédiaire 400, 401, 402 agencée pour un appui frontal de ce composant 200.

Et le dispositif préhenseur 100 comporte à la fois, d'une part des mors fixes 3 comportant la surface de référence 20 et agencés pour l'appui d'un composant 200 et des mors mobiles 2 agencés pour le centrage et/ou le serrage d'un composant 200 et/ou d'une plaque de maintien intermédiaire 400, 401, 402, et d'autre part au moins un générateur de dépression 60 agencé pour faire le vide dans la chambre de serrage par l'intermédiaire d'au moins un canal 35 ménagé dans les mors mobiles 2 et/ou les mors fixes 3.

Plus particulièrement, le dispositif préhenseur 100 comporte des mors mobiles 2 agencés pour le centrage et/ou le serrage d'un composant 200 et/ou d'une plaque de maintien intermédiaire 400, 401, 402, laquelle est en appui sur la surface de référence 20 et sert d'appui à un composant 200, et les mors mobiles 2 comportent un évidement 24 qui est ménagé autour de cette plaque de maintien intermédiaire 400, 401, 402, pour assurer un jeu permettant à ces mors mobiles 2 de se déformer élastiquement et de se rapprocher de l'axe de pince D, pour serrer le composant 200.

Plus particulièrement, le dispositif préhenseur 100 comporte des mors fixes 3 comportant la surface de référence 20 et agencés pour l'appui d'un composant 200, et de tels mors mobiles 2 agencés pour le centrage et/ou le serrage d'un composant 200 et/ou d'une plaque de maintien intermédiaire 400, 401, 402, laquelle est en appui sur la surface de référence 20 et sert d'appui à un composant 200, et est agencée pour le maintien des mors fixes 3.

Plus particulièrement, le dispositif préhenseur 100 comporte, alignés selon un axe de pince D, une palette 40 comportant des moyens de préhension 41 agencés pour coopérer avec un outillage ou/et un manipulateur, et un dispositif actionneur agencé pour commander l'ouverture ou la fermeture de la pince.

Dans une exécution particulière, ce dispositif actionneur comporte une bague rotative autour de l'axe de pince D pour commander la fermeture de la pince, par poussée sur des mors mobiles 2 que comporte la pince.

Dans une autre exécution particulière illustrée par les figures, le dispositif préhenseur 100 comporte, selon l'axe de pince D, au travers de cette palette 40 ou autour d'elle un moyen de manœuvre 90, tel qu'une vis, un écrou, ou une tige de poussée ou de traction, pour actionner des moyens de poussée 50 sur support élastique, et un cône 30 fermant ou ouvrant, comportant des surfaces évolutives 32, notamment coniques, qui sont agencées pour coopérer avec des surfaces complémentaires 23 que comportent les mors mobiles 2 et/ou les mors fixes 3, et qui constituent des surfaces d'actionnement de la pince 80.

Plus particulièrement encore, seuls les mors mobiles 2 comportent de telles surfaces complémentaires 23, dont sont dépourvus les mors fixes 3 quand le dispositif préhenseur 100 en comporte.

Le générateur de dépression 60 comporte plus particulièrement une cartouche de venturi, qui est positionnée entre un circuit d'entrée de soufflage d'air par au moins une piste de soufflage 471, 472, un circuit de sortie d'air 460, et une zone d'aspiration 600 dans laquelle est créée, lors d'un soufflage d'air en entrée, une dépression transmise à la chambre de serrage par cet au moins un canal 35.

Avantageusement le générateur de dépression 60 comporte une cartouche de venturi logée dans un orifice principal 450, et des orifices annexes 460, 470, définissant des canaux de circulation d'air dont au moins un canal de soufflage 475 alimenté par au moins une piste de soufflage 471, 472.

Plus particulièrement, c'est la palette 40 qui comporte le générateur de dépression 60 comportant une cartouche de venturi logée dans un canal 45 avec un orifice principal 450, et des orifices annexes 460, 470, définissant des canaux de circulation d'air, dont au moins un canal de soufflage 475 alimenté par au moins une piste de soufflage 471, 472 ; dans une exécution particulière non limitative, cette au moins une piste et ces orifices sont limités par des clapets anti-retour 476 et/ou des bouchons.

Dans une autre variante, certains de ces orifices sont maintenus ouverts.

Dans une exécution particulière, les mors mobiles 2 et les mors fixes 3 sont alternés. De façon générale, les mors mobiles 2 et fixes 3 sont séparés deux à deux par une fente 4.

Plus particulièrement, les mors mobiles 2 d'une part, et les mors fixes 3 d'autre part, sont en symétrie de rotation par rapport à l'axe de pince D.

Plus particulièrement, les mors mobiles 2 et les mors fixes 3 sont en nombre égal.

Dans une variante, le circuit de dépression, pour rester simple à réaliser, se fait préférentiellement au travers d'au moins un mors fixe 3, voire d'un seul mors fixe 3. Les mors fixes 3 canalisent facilement l'aspiration jusqu'à la plaque de maintien. Les mors mobiles 2 pivotent en se déformant et nécessitent du jeu entre eux et la plaque de maintien, ce qui permet difficilement de transmettre l'aspiration. Ainsi de préférence le canal 35 est situé à travers un mors fixe 3 de la pince élastique 80. Les figures illustrent une exécution non limitative avec un seul canal 35 dans un seul mors fixe 3, qui canalise l'aspiration, ce qui se révèle suffisant si le dimensionnement du venturi est bien effectué. On peut naturellement imaginer facilement de distribuer l'aspiration sur plusieurs mors fixes 3, par exemple en usinant une rainure circulaire dans l'embase de la palette 40, qui peut alors distribuer l'aspiration à chaque mors fixe 3.

Une pression de soufflage comprise entre 4 et 6 bars au niveau des pistes de soufflage 471 et 472 permet, avec un venturi « FESTO » de type « VN-05-H » ou « VN-05-L », dans un logement de diamètre 6 mm, d'atteindre la dépression souhaitée dans la chambre.

Concernant le moyen de serrage des pinces, le dessin présente une vis comme moyen de serrage/desserrage manuel. Toutefois, si la machine est équipée d'une tige de commande qui passe au centre de la palette, alors la tige de commande peut remplacer la vis comme moyen de serrage/desserrage automatique si elle est assez puissante.

L'invention concerne encore un procédé de fixation d'un composant 200 de micromécanique ou d'horlogerie dans la chambre de serrage d'un tel dispositif préhenseur 100, selon lequel : on dispose sur la surface de référence 20 le composant 200, soit indirectement au travers d'une plaque de maintien intermédiaire 400, 401, 402, indexée par vis 38 ou/et goupille 39 sur au moins un mors fixe 3, soit directement en appui sur des orifices d'un réseau en dépression débouchant des mors mobiles 2 ou/et fixes 3 au niveau de cette surface de référence 20, puis on effectue un premier maintien par dépression, puis un deuxième maintien de couple supérieur à celui du premier maintien par pivotement des mors mobiles 2.

Naturellement, l'indexation en position, et en particulier en position angulaire du composant 200 peut être réalisée par tout moyen, le plus simple et le moins coûteux étant la goupille ; cette goupille peut être sur les mors fixes 3, ou bien sur la plaque de maintien des mors fixes 3. Les figures illustrent le cas où la goupille 39 est fixée dans la plaque de maintien, comme cette dernière est elle-même goupillée dans la pince élastique 80. Dans une variante, si on travaille avec un brut standardisé qui possède une référence telle qu'une encoche par exemple, il peut être avantageux d'avoir une orientation dans les mors fixes ; on peut ainsi changer la plaque de maintien qui possède une empreinte vacuum différente pour chaque référence sans devoir ajouter une goupille ou sans devoir usiner une goutte dans l'empreinte. La solution illustrée permet de reprendre le composant usiné 200 une fois détouré, si on a besoin de retoucher la pièce terminée par exemple. Cette solution est plus flexible et plus précise (car la localisation de la goupille et l'empreinte vacuum sont usinées dans la même opération). Si la pièce à usiner comporte une face fraisée d'indexation ou un dièdre, la goupille dans la plaque de maintien, ou bien une contre-forme d'orientation usinée directement dans la plaque de maintien peut reprendre l'indexation. On comprend que l'utilisation d'une variété de plaques de maintien intermédiaires adaptées à la fabrication de chaque type de composant coûte moins cher qu'un usinage, parfois irréversible, de mors.

Pour bénéficier de l'aspiration afin de maintenir le composant 200 par dépression, il suffit de percer la plaque ou l'un de ses composants 401, 402, ou l'empreinte/appui de référence, et de joindre la zone d'aspiration 600.

Plus particulièrement, on équipe le dispositif préhenseur 100 d'au moins un générateur de dépression 60, on maintient un composant 200 qui est un brut dans les mors mobiles 2 et/ou fixes 3, on détoure dans ce brut un composant usiné, qu'on maintient par dépression avant sa récupération par un opérateur ou par un manipulateur robotisé.

En somme, l'invention permet la confection économique d'un dispositif préhenseur garantissant à la fois un bon positionnement du composant et un bon serrage ; notamment elle peut être réalisée par la modification d'un moyen de serrage standard reconnu et répandu, tel une pince de type pince « Ottet » ou similaire.

L'invention apporte un gain en précision d'usinage, notamment pour les reprises d'usinage, car l'appui de référence permet une meilleure répétabilité de positionnement.

L'invention offre la possibilité de bénéficier du vide pour différentes fonctions : détourage complet d'un composant usiné, amélioration du maintien du composant, maintien d'un composant avec pinces desserrées.

L'invention est facile à identifier, par : la distinction de segments fixes et mobiles (avec l'absence de cônes d'actionnement et la solidarisation des segments fixes à travers une plaque de maintien), la présence d'un appui de référence sur les segments fixes, le passage d'une dépression à travers les pinces élastiques et disponible sur l'appui de référence.

La compacité de l'invention s'inscrit parfaitement dans la tendance de miniaturisation des moyens d'usinage de micromécanique, avec un encombrement qui répond justement aux besoins dimensionnels des micromachines actuelles tout en intégrant des fonctionnalités complémentaires.

## Revendications

1. Dispositif préhenseur (100) de maintien, centrage, et/ou serrage en pince d'un composant (200) de micromécanique ou d'horlogerie dans une chambre de serrage délimitée par une pince comportant au moins un mors mobile (2), **caractérisé en ce que** ledit au moins un mors mobile (2) ou un mors fixe (3), ou, quand ladite pince comporte une pluralité de mors au moins une partie desdits mors mobiles (2) et/ou mors fixes (3), comporte une surface de référence (20) agencée pour un appui frontal direct d'un dit composant (200) et/ou pour un appui frontal direct d'une plaque de maintien intermédiaire (400, 401, 402) agencée pour un appui frontal d'un dit composant (200), et **en ce que**, ledit dispositif préhenseur (100) comporte à la fois, d'une part des dits mors fixes (3) comportant ladite surface de référence (20) et agencés pour l'appui d'un dit composant (200) et des dits mors mobiles (2) agencés pour le centrage et/ou le serrage d'un dit composant (200) et/ou d'une dite plaque de maintien intermédiaire (400, 401, 402), et d'autre part au moins un générateur de dépression (60) agencé pour faire le vide dans ladite chambre de serrage par l'intermédiaire d'au moins un canal (35) ménagé dans lesdits mors mobiles (2) et/ou lesdits mors fixes (3).

2. Dispositif préhenseur (100) selon la revendication 1, **caractérisé en ce que** ledit dispositif préhenseur (100) comporte des dits mors mobiles (2) agencés pour le centrage et/ou le serrage d'un dit composant (200) et/ou d'une dite plaque de maintien intermédiaire (400, 401, 402), laquelle est en appui sur ladite surface de référence (20) et sert d'appui à un dit composant (200), et **en ce que** lesdits mors mobiles (2) comportent un évidement (24) ménagé autour d'une dite plaque de maintien intermédiaire (400, 401, 402) pour assurer un jeu permettant auxdits mors mobiles (2) de se déformer et de s'approcher dudit axe de pince (D), pour serrer ledit composant (200).

3. Dispositif préhenseur (100) selon la revendication 1, **caractérisé en ce que** ledit dispositif préhenseur (100) comporte des dits mors fixes (3) comportant ladite surface de référence (20) et agencés pour l'appui d'un dit composant (200) et des dits mors mobiles (2) agencés pour le centrage et/ou le serrage d'un dit composant (200) et/ou d'une dite plaque de maintien intermédiaire (400, 401, 402), laquelle est en appui sur ladite surface de référence (20) et sert d'appui à un dit composant (200), et est agencée pour le maintien desdits mors fixes (3).

4. Dispositif préhenseur (100) selon l'une des revendications 1 à 3, **caractérisé en ce que** ledit dispositif préhenseur (100) comporte, alignés selon un axe de pince (D), une palette (40) comportant des moyens de préhension (41) agencés pour coopérer avec un outillage ou/et un manipulateur, et un dispositif actionneur agencé pour commander l'ouverture ou la fermeture de ladite pince.

5. Dispositif préhenseur (100) selon la revendication 4, **caractérisé en ce que** ledit dispositif préhenseur (100) comporte, alignés selon un axe de pince (D), une palette (40) comportant des moyens de préhension (41) agencés pour coopérer avec un outillage ou/et un manipulateur, et ledit dispositif actionneur qui comporte une bague rotative autour dudit axe de pince (D) pour commander la fermeture de ladite pince, par poussée sur des dits mors mobiles (2) que comporte ladite pince.

6. Dispositif préhenseur (100) selon la revendication 4, **caractérisé en ce que** ledit dispositif préhenseur (100) comporte, alignés selon un axe de pince (D), une palette (40) comportant des moyens de préhension (41) agencés pour coopérer avec un outillage ou/et un manipulateur, et un dit dispositif actionneur qui comporte des moyens de poussée (50) sur support élastique, un cône (30) fermant ou ouvrant, comportant des surfaces coniques (32) agencées pour coopérer avec des surfaces complémentaire (23) que comportent lesdits mors mobiles (2) et/ou lesdits mors fixes (3) et qui constituent des surfaces d'actionnement de ladite pince.

7. Dispositif préhenseur (100) selon la revendication 6, **caractérisé en ce que** seuls lesdits mors mobiles (2) comportent des dites surfaces complémentaire (23), dont sont dépourvus lesdits mors fixes (3).

8. Dispositif préhenseur (100) selon l'une des revendications 1 à 7, **caractérisé en ce que** ledit au moins un générateur de dépression (60) comporte une cartouche de venturi positionnée entre un circuit d'entrée de soufflage d'air par au moins une piste de soufflage (471, 472) et une zone d'aspiration (600) dans laquelle est créée, lors d'un soufflage d'air en entrée, une dépression transmise à ladite chambre de serrage par ledit au moins un canal (35).

9. Dispositif préhenseur (100) selon la revendication 8, **caractérisé en ce que** ledit générateur de dépression (60) comporte une cartouche de venturi logée dans un orifice principal (450), et des orifices annexes (460, 470) définissant des canaux de circulation d'air dont au moins un canal de soufflage (475) alimenté par au moins une dite piste de soufflage (471, 472).

10. Dispositif préhenseur (100) selon les revendications 4 et 9, **caractérisé en ce que** ladite palette (40) comporte ledit générateur de dépression (60), ladite cartouche de venturi, ledit orifice principal (450), lesdits orifices annexes (460, 470), ledit canal de soufflage (475), ladite au moins une dite piste de soufflage (471, 472), lesdits clapets anti-retour (476), lesdites piste et lesdits orifices étant limitables par des clapets anti-retour (476) ou des bouchons.

11. Dispositif préhenseur (100) selon l'une des revendications 1 à 10, caractérisé et en ce que lesdits mors mobiles (2) et lesdits mors fixes (3) sont alternés.

12. Dispositif préhenseur (100) selon la revendication 11, **caractérisé en ce que** lesdits mors mobiles (2) d'une part, et lesdits mors fixes (3) d'autre part, sont symétriques en rotation par rapport audit axe de pince (D).

13. Dispositif préhenseur (100) selon la revendication 11 ou 12, **caractérisé en ce que** lesdits mors mobiles (2) et lesdits mors fixes (3) sont en nombre égal.

14. Procédé de fixation d'un composant (200) de micromécanique ou d'horlogerie dans la chambre de serrage d'un dispositif préhenseur (100) selon l'une des revendications 1 à 13, selon lequel : on dispose sur ladite surface de référence (20) ledit composant (200), soit indirectement au travers d'une plaque de maintien intermédiaire (400, 401, 402) indexée par vis (38) ou/et goupille (39) sur au moins un dit mors fixe (3), soit directement en appui sur des orifices d'un réseau en dépression débouchant de mors mobiles (2) ou/et fixes (3) au niveau de ladite surface de référence (20), puis on effectue un premier maintien par dépression, puis un deuxième maintien de couple supérieur à celui dudit premier maintien par pivotement des mors mobiles (2).

15. Procédé de fixation selon la revendication 14, selon lequel on maintient un composant (200) qui est un brut dans lesdits mors mobiles (2) et/ou fixes (3), on détoure dans ce dit brut un composant usiné, qu'on maintient par dépression avant sa récupération par un opérateur ou par un manipulateur robotisé.
